# EUROPEAN PATENT APPLICATION

(11) **EP 4 541 239 A1**
(43) Date of publication of application: **23.04.2025**
(21) Application number: 23203901.6
(22) Date of filing: 16.10.2023
(51) Int. Cl.: A47J 31/60

(54) **HOT BEVERAGE MAKER FOR AIRCRAFT**

(71) Applicant: B/E Aerospace, Inc., Winston-Salem, NC 27105 (US)
(72) Inventor: PARDILLA, Ricky Herminigildo, San Pablo City, Laguna, 4000 (PH); SAN JUAN, Ferdinand, Santo Tomas City, Batangas, 4234 (PH); DE VILLA, Edmundo Catapang, San Pablo City, Laguna, 4000 (PH)
(74) Representative: Dehns

(57) **Abstract**

A hot beverage maker (200) for an aircraft galley includes a water inlet (212) for connecting the hot beverage maker (200) to an external cold water supply, a hot water tank (201) to heat the cold water to produce hot water, and a brew-head (210) to brew and dispense a hot beverage using the hot water. The hot beverage maker also includes a descaling tank (211) to store a descaling solution, a descaling regulator valve (219) to selectively provide a volume of the descaling solution to the hot water tank (201), and a user input interface (208). The hot beverage maker (200) is arranged to execute a cleaning operation (218) responsive to a user input provided via the user input interface (208). The descaling regulator valve (219) provides the volume of descaling solution to the hot water tank (201) when the cleaning operation (218) is executed.

## Description

### TECHNICAL FIELD

This disclosure relates to hot beverage makers, and in particular to hot beverage makers installed in aircraft galleys.

### BACKGROUND

Limescale may build-up in hot beverage makers during normal use. If this limescale build-up is not prevented or removed, the hot beverage maker may have performance issues and, in some cases, the hot beverage maker may fail. Failure modes may include clogged pipes resulting in slow or no water flow, corrosion of the hot beverage maker, e.g. the hot water tank, water leaks from valves of the hot beverage maker, or water leaks in the brew-head assembly.

In aerospace applications, cleaning, repair or replacement of a hot beverage maker may cause significant logistics issues. For example, this may require an aircraft to remain grounded for longer than planned in order to address an issue with the hot beverage maker.

### SUMMARY

The present disclosure provides a hot beverage maker for an aircraft galley comprising: a water inlet arranged to connect the hot beverage maker to receive cold water from an external water supply; a hot water tank arranged to heat cold water from the external water supply to produce hot water; a brew-head arranged to brew a hot beverage using hot water from the hot water tank and arranged to dispense the hot beverage; a descaling tank arranged to store a descaling solution; a descaling regulator valve arranged to selectively provide a volume of descaling solution from the descaling tank to the hot water tank; and a user input interface; wherein the hot beverage maker is arranged to execute a cleaning operation responsive to a user input provided via the user input interface; and wherein the descaling regulator valve is arranged to provide the volume of descaling solution to the hot water tank when the cleaning operation is executed.

The external water supply may, for example, be a water supply of or for the aircraft galley.

In some examples, the inlet is in fluid communication with the hot water tank so as to provide the cold water (e.g. from the external water supply) to the hot water tank.

The cold water may, for example, be ambient temperature water, chilled water or water above the ambient temperature. The hot water is hotter than the cold water and may be a suitable temperature for making a hot beverage. For example, the hot water may be in the range of 60 degrees Celsius to 110 degrees Celsius, e.g. 70 degrees Celsius to 100 degrees Celsius, e.g. 80 degrees Celsius to 90 degrees Celsius.

In some examples, the brew-head is in fluid communication with the hot water tank so as to receive the hot water from the hot water tank.

In some examples, the brew-head is arranged to dispense the hot beverage externally from the hot beverage maker. For example, the brew-head may be arranged to dispense the hot beverage to a cup, a jug or the like that is positioned to receive the hot beverage from the brew-head.

The descaling tank may have a volume that is sufficiently large to store at least a year's supply of descaling agent.

In some examples, the descaling tank has a volume of at least 1 ml.

In some examples, the volume of the descaling tank is less than a volume of the hot water tank.

In some examples, the descaling tank has a volume of less than 20 ml. Thus, for example, the descaling tank may have a volume of between 1 ml and 20 ml, e.g. between 3 ml and 10 ml, e.g. approximately 7 ml.

In some examples, the descaling tank is in fluid communication with the hot water tank so as to provide the descaling solution to the hot water tank.

The descaling regulator valve may, for example, be any valve suitable for selectively opening and closing so as to selectively provide a volume of descaling solution from the descaling tank to the hot water tank.

In some examples, the volume of descaling solution provided to the hot water tank is a known volume. For example, the descaling regulator valve may be arranged to open for a certain period of time so as to provide a known volume of descaling solution to the hot water tank.

The user input interface may be any suitable interface for receiving a user input. For example, the user input interface may be a button, a touch-screen interface, a knob or the like.

In some examples, the user input interface for receiving the user input to execute the cleaning operation is a different user input interface than the user input interface for receiving a user input to make a hot beverage. For example, the hot beverage maker may comprise a second user input interface for receiving a user input to make a hot beverage.

In some examples, the hot beverage maker is arranged to discharge the descaling solution (e.g. mixed with water) externally when the cleaning operation is executed.

In some examples, the hot beverage maker comprises a drainage outlet arranged to connect the hot beverage maker to an external drain.

The external drain may, for example, be a drain of or for the aircraft galley.

In some examples, the hot beverage maker comprises a drain valve arranged to selectively discharge liquid from the hot beverage maker via the drainage outlet.

The drain valve may, for example, be any valve suitable for selectively opening and closing so as to selectively discharge liquid from the hot beverage maker via the drainage outlet.

In some examples, the drainage outlet is in fluid communication with the hot water tank so as to allow discharge of liquid from the hot water tank via the drainage outlet.

In some examples, the hot beverage maker is arranged to recirculate the descaling solution (e.g. mixed with water) through the hot beverage maker when the cleaning operation is executed. For example, the hot beverage maker may be arranged to recirculate the descaling solution (e.g. mixed with water) through at least the hot water tank and/or the brew-head.

In some examples, the hot beverage maker is arranged to discharge the descaling solution (e.g. mixed with water) via the drainage outlet when the cleaning operation is executed. For example, the hot beverage maker may be arranged to recirculate the descaling solution (e.g. mixed with water) when the cleaning operation is executed, and following the recirculation of the descaling solution, the hot beverage maker may be arranged to discharge the descaling solution (e.g. mixed with water) via the drainage outlet.

In some examples, the hot beverage maker is arranged to recirculate water when the cleaning operation is executed. For example, the hot beverage maker may be arranged to discharge the descaling solution (e.g. mixed with water) when the cleaning operation is executed, and following the discharge of the descaling solution, the hot beverage maker may be arranged to recirculate water through the hot beverage maker.

In some examples, the hot beverage maker is arranged to rinse the hot beverage maker with water when the cleaning operation is executed. For example, the hot beverage maker may be arranged to discharge the descaling solution (e.g. mixed with water) when the cleaning operation is executed, and, following the discharge of the descaling solution, the hot beverage maker may be arranged to rinse the hot beverage maker with water. For example, the hot beverage maker may be arranged to recirculate water through the hot beverage maker and when the cleaning operation is executed, and following the recirculation of water, the hot beverage maker may be arranged to rinse the hot beverage maker with water.

In some examples, the hot beverage maker comprises a descaling pump arranged to mix the descaling solution with cold water.

In some examples, the hot beverage maker comprises a descaling pump arranged to pump the descaling solution (e.g. mixed with water) from the descaling tank to the hot water tank when the cleaning operation is executed.

The descaling pump may be any pump suitable for at least one of mixing the descaling solution with cold water and pumping the descaling solution (e.g. mixed with water) from the descaling tank to the hot water tank.

In some examples, the hot beverage maker comprises a brew-head regulator valve.

In some examples, the brew-head regulator valve is arranged to provide a volume of hot water from the hot water tank to the brew-head responsive to a user input to make a hot beverage. For example, the brew-head regulator valve may be arranged between the hot water tank and the brew-head such that opening of the brew-head regulator valve allows hot water to flow from the hot water tank to the brew-head and closing of the brew-head regulator valve prevents fluid from flowing from the hot water tank to the brew-head. The brew-head regulator valve may, for example, be any valve suitable for selectively opening and closing so as to selectively allow hot water to flow from the hot water tank to the brew-head.

In some examples, the brew-head regulator valve is arranged to close so as to recirculate the descaling solution (e.g. mixed with water) through the hot beverage maker when the cleaning operation is executed.

In some examples, the hot beverage maker comprises a brew-head pump.

The brew-head pump may be any pump suitable for pumping hot water from the hot water tank to the brew-head.

In some examples, the brew-head pump is arranged to pump hot water from the hot water tank to the brew-head responsive to a user input to make a hot beverage.

In some examples, the brew-head pump is arranged to recirculate the descaling solution (e.g. mixed with water) through the hot beverage maker when the cleaning operation is executed.

In some examples, the hot beverage maker comprises a water outlet arranged to selectively discharge hot water or cold water.

In some examples, the water outlet is arranged in fluid communication with at least one of the water inlet and the hot water tank. For example, the hot water tank may provide hot water to the water outlet and/or the water inlet may provide cold water to the water outlet. For example, a flow path between the water inlet and the water outlet may bypass the hot water tank.

In some examples, the hot beverage maker comprises a water filter arranged between the water inlet and the water outlet.

In some examples, the hot beverage maker comprises a water outlet regulator valve.

The water outlet regulator valve may, for example, be any valve suitable for selectively opening and closing so as to selectively provide hot water from the hot water tank to the water outlet and/or provide cold water from the water inlet to the water outlet. For example, the water outlet regulator valve may be a three-way valve suitable for selectively connecting the water outlet to either, or neither, of the hot water tank or the water inlet. In some examples, the water outlet regulator valve may be arranged to selectively connect the hot water tank to the water inlet, for example, so as to recirculate water through the hot beverage maker.

In some examples, the water outlet regulator valve is arranged to provide a volume of hot water to the water outlet responsive to a user input to provide hot water. For example, by opening so as to connect the hot water tank to the water outlet regulator.

In some examples, the water outlet regulator valve is arranged to provide a volume of cold water to the water outlet responsive to a user input to provide cold water, e.g. by the water outlet regulator valve opening so as to connect the water inlet to the water outlet.

In some examples, the water outlet regulator valve is arranged to close so as to recirculate the descaling solution (e.g. mixed with water) through the hot beverage maker when the cleaning operation is executed.

In some examples, the hot beverage maker comprises a hot water pump.

The hot water pump may be any pump suitable for pumping hot water from the hot water tank to the water outlet.

In some examples, the hot water pump is arranged to pump hot water from the hot water tank to the water outlet responsive to a user input to provide hot water.

In some examples, the hot water pump is arranged to recirculate the descaling solution (e.g. mixed with water) through the hot beverage maker when the cleaning operation is executed.

In some examples, the hot beverage maker comprises a cold water pump.

The cold water pump may be any pump suitable for pumping cold water from the water inlet to the water outlet.

In some examples, the cold water pump is arranged to pump cold water from the water inlet to the water outlet responsive to the user input to provide cold water.

In some examples, the cold water pump is arranged to recirculate the descaling solution (e.g. mixed with water) through the hot beverage maker when the cleaning operation is executed.

In some examples, the hot water tank comprises a pressure relief valve; wherein the pressure relief valve is arranged to reduce an internal pressure of the hot water tank when the internal pressure exceeds a threshold.

In some examples the hot beverage maker is arranged to execute a rinsing operation responsive to a user input provided via the user input interface; and the hot beverage maker is arranged to rinse the hot beverage maker with water when the rinsing operation is executed . In some examples, the user input interface is arranged to receive a user input for executing a rinsing operation of the hot beverage maker independently of receiving a user input for executing a cleaning operation of the hot beverage maker.

### BRIEF DESCRIPTION OF DRAWINGS

One or more non-limiting examples will now be described, by way of example only, and with reference to the accompanying figures in which:
Figure 1 shows an example of an internal view of a hot beverage maker installed in an aircraft galley;
Figure 2 shows a schematic diagram of the components of a hot beverage maker, such as the hot beverage maker shown in Figure 1; and
Figure 3 shows a method of cleaning a hot beverage maker, such as the hot beverage makers shown in Figures 1 and 2.

### DETAILED DESCRIPTION

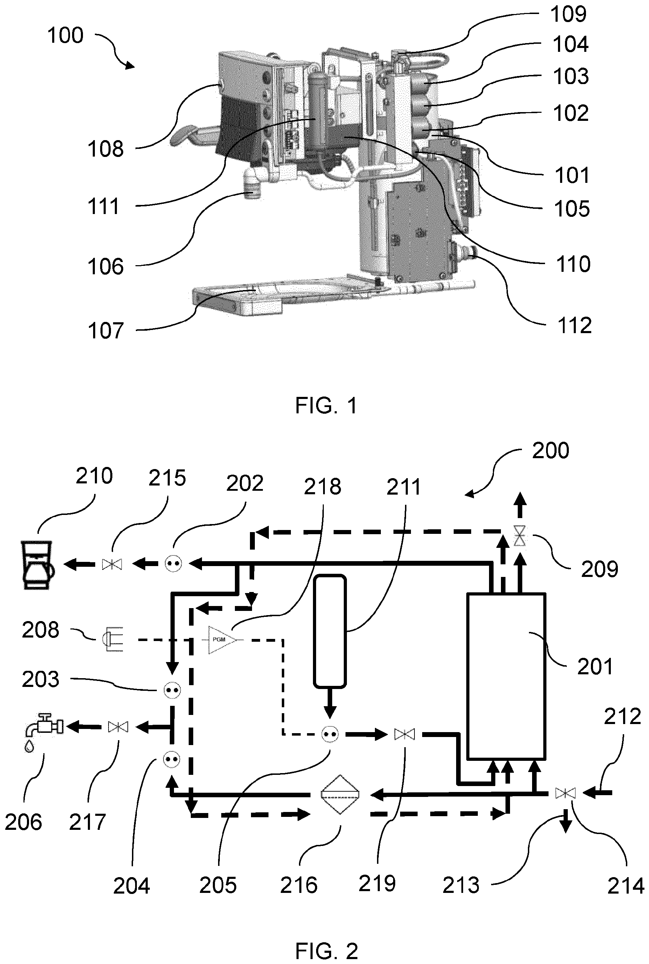

Figure 1 shows an example of an internal view of a hot beverage maker 100 installed in an aircraft. Water is supplied to the hot beverage maker 100 via a water inlet 112. The hot beverage maker 100 in this example is supplied by an external water source, for instance the hot beverage maker 100 may be plumbed into the water supply of a galley of the aircraft. Water supplied via the water inlet 112 is provided to a hot water tank 101. The hot water tank 101 heats the water so as to provide hot water for making hot beverages. If excess pressure builds up in the hot water tank, pressure may be released via a pressure relief vale 109, situated above the hot water tank 101.

The hot beverage maker 100 also includes a brew-head 110. In the brew-head 110, coffee, tea or the like is mixed with hot water to make a hot beverage. In this example, a brew-head pump 102 is arranged to pump hot water from the hot water tank 101 to the brew-head 110 when a user provides an input to make a hot beverage. In this example, the brew-head pump 102 is a solenoid pump. The brew-head 110 dispenses the hot beverage via an outlet (not shown). A container, for example a cup or jug, is placed below the brew-head 110 to receive the hot beverage dispensed by the brew-head 110.

The hot beverage maker 100 in this example also includes a water outlet 106. In this example, If a user requires hot water from the hot beverage maker 100 this hot water is provided at the water outlet 106 rather than via the brew-head 110. This may reduce the likelihood of any residual coffee or the like in the brew-head 110 contaminating the hot water. In this example, the hot beverage makers 100 includes a hot water pump 103 to pump hot water from the hot water tank 101 to the water outlet 106. In this example, the hot water pump 103 is a solenoid pump.

In this example, the water outlet 106 is also arranged to dispense cold water. In this example, the hot beverage maker 100 includes a cold water pump 104 to pump cold water from the water inlet 112 to the water outlet 106, optionally via a cold-water filter (not shown). In this example, the cold water pump 104 is a solenoid pump.

A drip tray 107 may collect any liquid that is spilled from the water outlet 106 and/or the brew-head 110.

In beverage makers, such as hot beverage maker 100, limescale build-up can cause failure. For example, pipes and valves present in the hot beverage maker 100 can become blocked due to the build-up of lime scale. Therefore, it may be important to prevent the build-up of limescale in such devices. As the hot beverage maker 100 is plumbed in, it may not be possible to add a descaling solution to the water supply directly, unlike in hot beverage makers that have a removable water supply which is filled from a tap. Typically, plumbed in beverage makers must instead be uninstalled, such that the water inlet is disconnected from the water supply, in order for cleaning with a descaling solution to take place.

The hot beverage maker 100 includes a descaling tank 111 for storing a liquid descaling solution. By having its own descaling tank 111, the hot beverage maker 100 may be cleaned without requiring the hot beverage maker 100 to be disconnected from the water supply at the water inlet 112. Instead, a descaling solenoid pump 105 pumps a specific quantity of descaling solution from the descaling tank 111 to the hot water tank 101.

In the hot water tank 101, the descaling solution mixes with hot water stored in the hot water tank 101. Control of the amount of descaling agent in the descaling solution provided to the hot beverage maker 100 may be controlled accurately by using a descaling solution of a known concentration and by providing a specific volume of this descaling solution from the descaling tank 111.

Once the descaling solution has been provided to the hot water tank 101, the solution (mixed with water) is then recirculated through the hot beverage maker 100 to remove any limescale build-up present, for example any limescale build-up in the pipework of the beverage maker 100. The hot beverage maker 100 may thus be cleaned to prevent excess limescale build-up and/or in response to excess limescale build-up.

The descaling solenoid pump 105 mixes the descaling solution with water, so as to disperse the descaling solution through the water before recirculation through the hot beverage maker 100.

Once the descaling solution (mixed with water) has been recirculated through the hot beverage maker 100, it is discharged via the water outlet 106. This may allow a user to collect the descaling solution in a container for safe and/or convenient disposal. In other examples, discharge of the descaling solution may be via the brew-head 110 or via a drainage outlet (not shown) to a drainage system of the aircraft galley.

Discharge via the drainage outlet may not require the collection and disposal of the descaling solution, as the solution may be discharged directly to the aircraft galley. Discharge via any of these pathways may ensure that the respective pathway is cleaned with the descaling solution. A combination of any or all of these pathways for discharging the descaling solution may be used.

A cleaning button 108 is provided on the hot beverage maker 100. When the cleaning button 108 is pressed by a user, the hot beverage maker 100 executes a cleaning program that includes releasing the descaling solution, recirculating the descaling solution (mixed with water), discharging the descaling solution and rinsing the hot beverage maker 100. The inclusion of a cleaning button 108 may enable straightforward execution of the cleaning program for the hot beverage maker 100 by a user.

In this example, the hot water tank 101 has a volume of 66.9 ml. In this example, the pre-determined volume of descaling solution released from the descaling tank 111 is 6.7 ml, which is approximately one tenth of the volume of the hot water tank 101. In this example, the total volume of the descaling tank 111 is 20 ml. Thus, the descaling tank holds a sufficient volume of descaling solution to clean the hot beverage maker 3 times.

In this example, the amount of descaling solution provided by the descaling tank 111 each time it is cleaned is sufficient to prevent limescale build-up if the hot beverage maker 100 is cleaned at least three times per year. Therefore, the descaling tank 111 has the capacity to store enough descaling solution for a year and may be refilled once per year during the aircraft's annual maintenance so as to limit any disruption otherwise caused by refilling the descaling tank.

Other volumes are possible for each of the volume of the hot water tank 101, the volume of the descaling tank 111, and/or the volume of descaling solution provided by the descaling tank 111 each time the hot beverage maker 100 is cleaned. However, it may be beneficial for the descaling tank 111 to hold at least a year's supply of descaling solution for the reasons mentioned above.

Figure 2 shows a schematic diagram of the components of a hot beverage maker 200. The hot beverage maker 200 may be similar to, or the same as, the hot beverage maker 100 shown in Figure 1. The hot beverage maker 200 in Figure 2 is installed in an aircraft galley and is plumbed into a water supply for the galley. Solid arrows on Figure 2 show the direction of the flow path of water through the hot beverage maker 200 when in normal use.

The hot beverage maker 200 includes a water inlet 212 and a drainage outlet 213. These are respectively plumbed into the aircraft galley's water supply and the aircraft galley's drainage system. Water may be discharged from the hot beverage maker 200 via the drainage outlet 213 by operating a drain valve 214.

The hot beverage maker 200 includes a hot water tank 201. Water provided to the hot water tank 201 via the water inlet 212. The hot water tank 201 heats the water to produce hot water. Excess pressure may be relieved from the hot water tank 201 via a pressure relief valve 209.

The hot beverage maker 200 includes a brew-head 210, which may be similar to the brew-head 110 shown in Figure 1. In this example, the hot beverage maker 200 also includes a brew-head pump 202, which in this example is a solenoid pump. In this example, hot water from the hot water tank 201 is pumped to the brew-head 210 by the brew-head pump 202. In this example, the hot beverage maker includes 200 a first regulator valve 215 between the hot water tank 201 and the brew-head 210 which is used to regulate the supply of hot water to the brew-head 210.

The hot beverage maker includes a water outlet 206, which may be similar to the water outlet 106 shown in Figure 1. In this example, the hot beverage maker also includes a hot water pump 203. In this example, the hot water pump 203 is a solenoid pump. The hot water pump 203 pumps hot water from the hot water tank 201 to the water outlet 206. In this example, the hot beverage maker includes 200 a second regulator valve 217 between the hot water tank 201 and the water outlet 206 to regulate the flow of hot water from the hot water tank 201 to the water outlet 206.

In this example, the hot beverage maker includes 200 a cold water pump 204 to pump cold water from the water inlet 212 to the water outlet 206. In this example, the cold water pump 204 is a solenoid pump. In this example, the hot beverage maker 200 also includes a water filter 216 between the water inlet 212 and the water outlet 206 to regulate the flow of cold water from the water inlet 212 to the water outlet 206.

The hot beverage maker 200 includes a descaling tank 211, which may be similar to the descaling tank 111 shown in Figure 1. The descaling tank stores a descaling solution. In this example, the hot beverage maker 200 includes a descaling solenoid pump 205 to pump the descaling solution from the descaling tank 211 to the hot water tank 201 and mix the descaling solution with water. The hot beverage maker in this example also includes a descaling regulator valve 219 between the descaling tank 211 and the hot water tank 201 to regulate the flow rate of the descaling solution from the descaling tank 211.

In this example, a cleaning button 208 is provided on the hot beverage maker 200 for receiving a user input. When the cleaning button 208 is operated by a user, a cleaning program 218 is executed by a controller (not shown) for the hot beverage maker 200. The cleaning program 218 causes the descaling solution to be provided from the descaling tank 211 to the hot water tank 201 by opening the descaling regulator valve 219.

By operating the descaling regulator valve 219 for a specific period of time, a particular volume of descaling solution may be pumped to the hot water tank 201. In this example, the descaling solenoid pump 205 mixes the descaling solution with cold water from the water inlet and pumps the descaling solution (mixed with water) to the hot water tank 201.

Execution of the cleaning program 218 in this example causes recirculation of the descaling solution (mixed with water) through the hot beverage maker 200. Dashed arrows on Figure 2 shows the flow path of the descaling solution through the hot beverage maker 200 during the recirculation process.

During the recirculation process, each of the drain valve 214, the first regulator valve 215 and the second regulator valve 217 are closed. Once recirculation of the descaling solution (mixed with water) is completed, the hot beverage maker discharges the descaling solution (mixed with water) via any one or more of the water outlet 206, the brew-head 210 and/or the drainage outlet 213. Discharge is controlled via any one or more of the drain valve 214, the first regulator valve 215 and the second regulator valve 217.

In this example, execution of the cleaning programme 218 causes the third cold water pump 204 to pump the descaling solution to the hot water tank 201 via the water filter 216 to recirculate the descaling solution. This is opposite to the direction in which the cold water pump 204 pumps water to the water outlet 206 when dispensing cold water.

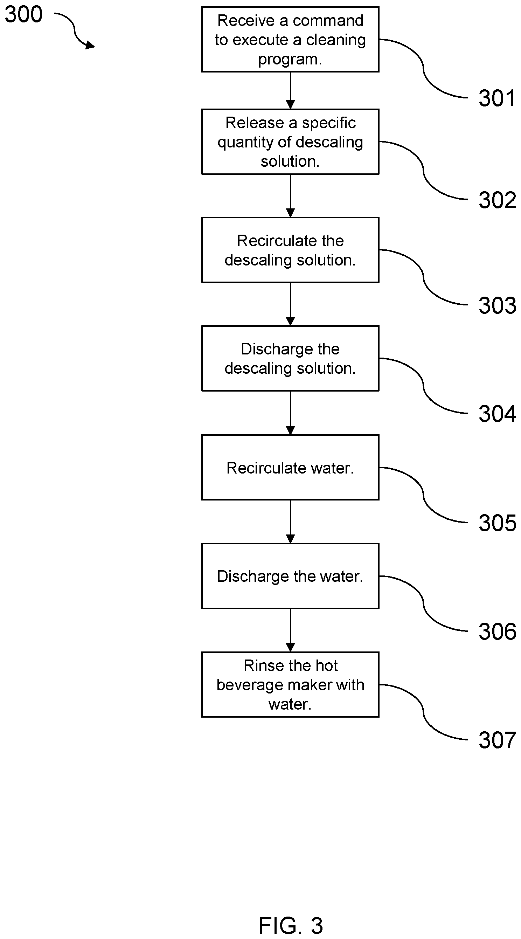

Figure 3 shows a method 300 for cleaning a hot beverage maker, such as the hot beverage maker 100 of Figure 1 or the hot beverage maker 200 of Figure 2.

A first step 301 of the method 300 includes receiving a command to execute a cleaning program. This may, for example, be in response to the operation of a cleaning button by a user of the hot beverage maker. For example, this cleaning program may be the cleaning program 218 shown in Figure 2.

A second step 302 of the method 300 includes releasing a specific quantity of descaling solution from a descaling tank of the hot beverage maker. This may include operating a descaling solenoid pump to pump a specific quantity of descaling solution form the descaling tank. This may also include providing the descaling solution to a hot water tank of the hot beverage maker.

A third step 303 of the method 300 includes recirculating the descaling solution (mixed with water) through the hot beverage maker. In this example, recirculation takes place for 15 minutes, but in other examples this may take place for a longer duration or for a shorter duration.

A fourth step 304 of the method 300 includes discharging the descaling solution (mixed with water) from the hot beverage maker. For example, this step may comprise discharging the descaling solution to a drain of an aircraft galley or discharging the descaling solution externally via an outlet of the hot beverage maker, for instance a brew-head or a water outlet.

A fifth step 305 of the method 300 includes recirculating water through the hot beverage maker. In this example, recirculation takes place for 15 minutes, but in other examples this may take place for a longer or shorter duration. Recirculation of the hot beverage maker may ensure that all of the descaling solution is fully dissolved in the water so as to prevent contamination of hot beverages with descaling agent after cleaning of the hot beverage maker is completed.

A sixth step 306 of the method 300 includes discharging the water from the hot beverage maker. For example, this step may comprise discharging the water to a drain of an aircraft galley or discharging the water externally via an outlet of the hot beverage maker, for instance a brew-head or a water outlet.

A seventh step 307 of the method 300 includes rinsing the hot beverage maker. For example, by directing water from a water inlet of the hot beverage maker to an outlet, such as a brew-head, water outlet or drainage outlet. In this example, the rinsing process is a 10-minute process, but in other examples this may take place for a longer duration or a shorter duration. Rinsing of the hot beverage maker may ensure that all of the descaling solution is flushed out of the hot beverage maker so as to prevent contamination of hot beverages with descaling agent after cleaning of the hot beverage maker is completed.

In this example, double pressing of the cleaning button causes rinsing of the hot beverage maker. For example, rinsing of the hot beverage maker may be performed independently of the rest of the cleaning method 300 by double pressing the cleaning button.

## Claims

1. A hot beverage maker for an aircraft galley comprising:
a water inlet arranged to connect the hot beverage maker to receive cold water from an external water supply;
a hot water tank arranged to heat the cold water to produce hot water;
a brew-head arranged to brew a hot beverage using hot water from the hot water tank and arranged to dispense the hot beverage;
a descaling tank arranged to store a descaling solution;
a descaling regulator valve arranged to selectively provide a volume of descaling solution from the descaling tank to the hot water tank; and
a user input interface;
wherein the hot beverage maker is arranged to execute a cleaning operation responsive to a user input provided via the user input interface; and
wherein the descaling regulator valve is arranged to provide the volume of descaling solution to the hot water tank when the cleaning operation is executed.

2. The hot beverage maker as claimed in claim 1, wherein the hot beverage maker is arranged to discharge the descaling solution externally when the cleaning operation is executed.

3. The hot beverage maker as claimed in claim 1 or claim 2, comprising:
a drainage outlet arranged to connect the hot beverage maker to an external drain; and
a drain valve arranged to selectively discharge liquid from the hot beverage maker via the drainage outlet.

4. The hot beverage maker as claimed in claim 3, wherein the hot beverage maker is arranged to discharge the descaling solution via the drainage outlet when the cleaning operation is executed.

5. The hot beverage maker as claimed in any one of the preceding claims, wherein the hot beverage maker is arranged to recirculate water when the cleaning operation is executed.

6. The hot beverage maker as claimed in any one of the preceding claims, wherein the hot beverage maker is arranged to rinse the hot beverage maker with water when the cleaning operation is executed.

7. The hot beverage maker as claimed in any one of the preceding claims, comprising a descaling pump arranged to mix the descaling solution with cold water and to pump the descaling solution from the descaling tank to the hot water tank when the cleaning operation is executed.

8. The hot beverage maker as claimed in any one of the preceding claims, wherein the hot beverage maker is arranged to recirculate the descaling solution through the hot beverage maker when the cleaning operation is executed.

9. The hot beverage maker as claimed in claim 8, comprising a brew-head regulator valve;
wherein the brew-head regulator valve is arranged to provide a volume of hot water from the hot water tank to the brew-head responsive to a user input to make a hot beverage; and
wherein the brew-head regulator valve is arranged to close so as to recirculate the descaling solution through the hot beverage maker when the cleaning operation is executed.

10. The hot beverage maker as claimed in claim 8 or 9, comprising a brew-head pump;
wherein the brew-head pump is arranged to pump hot water from the hot water tank to the brew-head responsive to a user input to make a hot beverage; and
wherein the brew-head pump is arranged to recirculate the descaling solution through the hot beverage maker when the cleaning operation is executed.

11. The hot beverage maker as claimed in any one of the preceding claims, comprising a water outlet arranged to selectively discharge hot water or cold water;
optionally wherein the hot beverage maker comprises a water filter arranged between the water inlet and the water outlet.

12. The hot beverage maker as claimed in claim 11, wherein the hot beverage maker is arranged to recirculate the descaling solution through the hot beverage maker when the cleaning operation is executed;
wherein the hot beverage maker comprises a water outlet regulator valve;
wherein the water outlet regulator valve is arranged to provide a volume of hot water to the water outlet responsive to a user input to provide hot water;
wherein the water outlet regulator valve is arranged to provide a volume of cold water to the water outlet responsive to a user input to provide cold water; and
wherein the water outlet regulator valve is arranged to close so as to recirculate the descaling solution through the hot beverage maker when the cleaning operation is executed.

13. The hot beverage maker as claimed in claim 11 or 12, wherein the hot beverage maker is arranged to recirculate the descaling solution through the hot beverage maker when the cleaning operation is executed;
wherein the hot beverage maker comprises a hot water pump;
wherein the hot water pump is arranged to pump hot water from the hot water tank to the water outlet responsive to a user input to provide hot water; and
wherein the hot water pump is arranged to recirculate the descaling solution through the hot beverage maker when the cleaning operation is executed.

14. The hot beverage maker as claimed in 11, 12 or 13, wherein the hot beverage maker is arranged to recirculate the descaling solution through the hot beverage maker when the cleaning operation is executed;
wherein the hot beverage maker comprises a cold water pump;
wherein the cold water pump is arranged to pump cold water from the water inlet to the water outlet responsive to the user input to provide cold water; and
wherein the cold water pump is arranged to recirculate the descaling solution through the hot beverage maker when the cleaning operation is executed.

15. The hot beverage maker as claimed in any one of the preceding claims, wherein the hot water tank comprises a pressure relief valve;
wherein the pressure relief valve is arranged to reduce an internal pressure of the hot water tank when the internal pressure exceeds a threshold.
